# EUROPÄISCHE PATENTSCHRIFT

(11) **EP 2 933 144 B1**
(45) Veröffentlichungstag und Bekanntmachung des Hinweises auf die Patenterteilung: **25.05.2016**
(21) Anmeldenummer: 14164949.1
(22) Anmeldetag: 16.04.2014
(51) Int. Cl.: B60Q 1/26

(54) **Kraftfahrzeugleuchte mit einer Vorrichtung zur wenigstens teilweise Befestigung der Kraftfahrzeugleuchte in einer Einbauöffnung einer Karosserie, sowie Verfahren zur Anordnung und Einstellung einer solchen Vorrichtung an einer Kraftfahrzeugleuchte**
Motor vehicle light with a device for at least partially fixing the motor vehicle light in an aperture of a vehicle body and method of assembling and adjusting such a device on a motor vehicle light
Feu de véhicule automobile comprenant un dispositif destiné à la fixation au moins partielle du feu dans une ouverture de carrosserie et procédé d'agencement et de réglage d'un tel dispositif sur un feu de véhicule automobile

(43) Veröffentlichungstag der Anmeldung: 21.10.2015
(73) Patentinhaber: odelo GmbH, 70329 Stuttgart (DE)
(72) Erfinder: Rommel, Bernd, 70736 Fellbach-Schmiden (DE); Deger, Rüdiger, 73728 Esslingen (DE)
(74) Vertreter: Benninger, Johannes

(56) Entgegenhaltungen:
- DE-A1- 19 926 842
- DE-U1- 20 213 362
- GB-A- 2 412 704

## Beschreibung

Die Erfindung betrifft eine Kraftfahrzeugleuchte gemäß dem Oberbegriff des Anspruchs 1 sowie ein Verfahren gemäß dem Oberbegriff des Anspruchs 12.

Eine typische Kraftfahrzeugleuchte umfasst einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte.

Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon

Es ist bekannt, beispielsweise als Heckleuchten ausgebildete Kraftfahrzeugleuchten mit Gewindebolzen und Muttern in einer Einbauöffnung einer Karosserie eines Kraftfahrzeugs zu befestigen. Damit einerseits zwischen dem Rand der Lichtscheibe und einer die Einbauöffnung umgebenden Wandung ein konstant breiter Spalt gebildet wird, und damit andererseits die durch die Lichtscheibe gebildete Fläche eine die Einbauöffnung umgebende Oberfläche der Karosserie bündig fortführt und/oder einer durch den Rand der Einbauöffnung vorgegebenen Kontur bündig folgt, gestaltet sich die Montage der Kraftfahrzeugleuchte schwierig.

Durch EP 2 133 235 A2 ist bekannt, einen Gewindebolzen in einer hierfür vorgesehenen Ausnehmung an einem Leuchtengehäuse einer Kraftfahrzeugleuchte vermittels eines Klebemittels festzulegen, wobei die Kraftfahrzeugleuchte in einer Lehre gehalten wird, welche die Lage und Position des Gewindebolzens vorgibt. Das Klebemittel ist vermittels Induktion aktivier- und schnell aushärtbar, so dass der Gewindebolzen in der von der Lehre vorgegebenen Lage und Position fixiert wird.

Eine nachträgliche Einstellung unter Veränderung der axialen Position des Gewindebolzens ist hierbei nicht mehr möglich.

Um eine solche nachträgliche Einstellung zu ermöglichen, ist bekannt, den Gewindebolzen als eine Hohlschraube mit Innen- und Außengewinde auszuführen, die mit ihrem Innengewinde auf einen in seiner Lage und Position am Leuchtengehäuse festgelegten Gewindebolzen aufgeschraubt ist. Zwischen dem Innengewinde der Hohlschraube und dem Gewindebolzen ist ein Klemmteil aus Kunststoff, beispielsweise Nylon, angeordnet. Beispielsweise kann das Klemmteil wie bei einer selbstsichernden Mutter ringförmig koaxial zum Innengewinde an der Hohlschraube angeordnet sein, oder wie bei einer entsprechenden selbstsichernden Schraube in einer sich entlang der Längsachse des Gewindebolzens erstreckenden, in das Außengewinde des Gewindebolzens eingelassenen Nut angeordnet sein.

Nachteilig hieran ist eine mangelnde Festlegung der Hohlschraube gegenüber dem Gewindebolzen durch das Klemmteil, wodurch es zu einer unbeabsichtigten Verstellung der Hohlschraube kommt, wenn auf diese beispielsweise von der Rückseite der Karosserie her eine Mutter mit einem zur Befestigung der Kraftfahrzeugleuchte in der Einbauöffnung vorgesehenen Drehmoment aufgeschraubt wird.

Durch GB 2 412 704 A ist gattungsgemäße Kraftfahrzeugleuchte mit einer Vorrichtung zur wenigstens teilweise Befestigung der Kraftfahrzeugleuchte in einer Einbauöffnung einer Karosserie eines Kraftfahrzeugs bekannt. Die Vorrichtung umfasst eine Hohlschraube mit einem Außengewinde und einer sich koaxial zur Längsachse der Hohlschraube erstreckenden zentralen Öffnung. Die Vorrichtung umfasst ferner einen an der Kraftfahrzeugleuchte festlegbaren oder festgelegten Gewindebolzen mit einer ersten, durch die zentrale Öffnung hindurchreichenden Gewindepartie sowie ein in der zentralen Öffnung auf der ersten Gewindepartie koaxial zwischen Hohlschraube und dem Gewindebolzen angeordnetes hülsenförmiges Klemmteil. Die Hohlschraube weist einen einseitig des Außengewindes angeordneten, radial von der Hohlschraube abstehenden Bund auf, welcher in montiertem Zustand der Vorrichtung der Kraftfahrzeugleuchte zugewandt ist. Das Klemmteil ist in der zentralen Öffnung um die Längsachse der Hohlschraube drehbar angeordnet. Das Klemmteil ist in Axialrichtung parallel zur Längsachse der Hohlschraube formschlüssig angeordnet. Das Klemmteil weist eine koaxial zur Längsachse der Hohlschraube verlaufende, durchgehende Axialöffnung auf, deren Innendurchmesser kleiner ist, als der Außendurchmesser der ersten Gewindepartie des Gewindebolzens. Das Klemmteil umfasst einen Ansatz, der eine in Eingriff mit einem Werkzeug bringbare Formgebung aufweist, um das Klemmteil gegenüber der Hohlschraube zu drehen.

Durch DE 202 13 362 U1 ist eine Befestigungsvorrichtung bekannt, die ein Trägerteil mit einem Außengewinde und einem Bund aufweist. Zur Drehmomentabstützung greift ein an einem Funktionskörper festgelegter Anschlag in montiertem Zustand der Befestigungsvorrichtung in eine im Bund des Trägerteils angeordnete Anschlagnut ein.

Ein Ziel bei der Entwicklung von in einer Serienfertigung in Einbauöffnungen von Karosserien von Kraftfahrzeugen zu montierender Kraftfahrzeugleuchten ist die Verringerung der Kosten. Dies kann erreicht werden beispielsweise durch:
- Einsparung der Anzahl der vorzunehmenden einzelnen Handlungen während der Montage, wodurch es zu weniger Fehlmontagen kommt, was die Gesamtkosten senkt,
- präzise Einstellung der an den Kraftfahrzeugleuchten vorgesehenen, zur Befestigung der Kraftfahrzeugleuchten in Einbauöffnungen von Karosserien von Kraftfahrzeugen vorgesehenen Vorrichtungen, wodurch weniger einzelne Handlungen während der Montage vorgenommen werden müssen und der Montageaufwand und dadurch die benötigte Zeit zur Montage verringert werden können, einhergehend mit verringerten Montagekosten,
- Vermeidung unbeabsichtigter Veränderungen der Einstellungen der an den Kraftfahrzeugleuchten vorgesehenen, zur Befestigung der Kraftfahrzeugleuchten in Einbauöffnungen von Karosserien von Kraftfahrzeugen vorgesehenen Vorrichtungen während der Montage, wodurch Montage und Umgang vereinfacht werden und es zu einem geringeren Nacharbeitsaufwand kommt.

Kraftfahrzeugleuchten sowie Vorrichtungen zu deren Befestigung, bei denen es nach erfolgter Einstellung während der Montage zu einer Veränderung der vorgenommenen Einstellung kommt, stehen diesem Ziel entgegen.

Eine Aufgabe der Erfindung ist, eine Kraftfahrzeugleuchte mit einer Vorrichtung zur wenigstens teilweise Befestigung der Kraftfahrzeugleuchte in einer Einbauöffnung einer Karosserie eines Kraftfahrzeugs zu entwickeln, welche eine zuverlässige Einstellung der Einbaulage der Kraftfahrzeugleuchte noch vor deren Einbau in die Einbauöffnung erlaubt und darüber hinaus eine unbeabsichtigte Veränderung dieser Einstellung während der Montage und des Einbaus in die Einbauöffnung verhindert. Ebenfalls eine Aufgabe der Erfindung ist, ein Verfahren zur Anordnung und Einstellung einer solchen Vorrichtung an einer Kraftfahrzeugleuchte zu entwickeln.

Die Aufgabe wird jeweils gelöst mit den Merkmalen der unabhängigen Ansprüche.

Weitere vorteilhafte Ausgestaltungen werden durch die Unteransprüche beschrieben.

Ein erster Gegenstand der Erfindung betrifft demnach eine Kraftfahrzeugleuchte mit einer Vorrichtung zur wenigstens teilweise Befestigung der Kraftfahrzeugleuchte in einer Einbauöffnung einer Karosserie eines Kraftfahrzeugs.

Die Vorrichtung umfasst eine Hohlschraube mit einem Außengewinde und einer sich koaxial zur Längsachse der Hohlschraube erstreckenden zentralen Öffnung, einen an einer Kraftfahrzeugleuchte, vorzugsweise an deren Leuchtengehäuse festlegbaren oder festgelegten Gewindebolzen mit einer ersten, durch die zentrale Öffnung hindurchreichenden Gewindepartie, sowie ein in der zentralen Öffnung auf der ersten Gewindepartie koaxial zwischen Hohlschraube und dem Gewindebolzen angeordnetes hülsenförmiges Klemmteil.

Der Gewindebolzen kann beispielsweise als eine auch als Doppelgewindebolzen bezeichnete Stockschraube ausgeführt sein, welche zusätzlich zu der ersten Gewindepartie eine zum Einschrauben in eine hierfür vorgesehene Ausnehmung an der Kraftfahrzeugleuchte, vorzugsweise an deren Leuchtengehäuse, vorgesehene zweite Gewindepartie aufweist.

Die erste Gewindepartie kann beispielsweise durch einen radial abstehenden Flansch von der zweiten Gewindepartie abgegrenzt sein.

Der Flansch begrenzt eine maximale Einschraubtiefe der Stockschraube einer hierfür vorgesehenen Ausnehmung an der Kraftfahrzeugleuchte, vorzugsweise an deren Leuchtengehäuse.

Die Hohlschraube umfasst ferner einen einseitig des Außengewindes angeordneten, radial von der Hohlschraube abstehenden Bund. Der Bund ist in montiertem Zustand der Vorrichtung der Kraftfahrzeugleuchte bzw. dem Leuchtengehäuse zugewandt.

Das Außengewinde dient der zumindest teilweisen Befestigung der Kraftfahrzeugleuchte in einer Einbauöffnung einer Karosserie eines Kraftfahrzeugs vermittels einer oder mehrerer von der der Einbauöffnung abgewandten Rückseite der Karosserie auf das Außengewinde aufzuschraubenden Mutter. Die Einschränkung, wonach das Außengewinde einer zumindest teilweisen Befestigung der Kraftfahrzeugleuchte in einer Einbauöffnung einer Karosserie eines Kraftfahrzeugs dient, ist hierbei dahingehend zu verstehen, dass mehr als eine beschriebene Vorrichtung zur Befestigung einer Kraftfahrzeugleuchte in einer Einbauöffnung einer Karosserie eines Kraftfahrzeugs vorgesehen sein können.

Zwischen Bund und Karosserie können eine oder mehrere Unterleg- und/oder Dichtscheiben vorgesehen sein.

Zwischen der mindestens einen in in die Einbauöffnung eingebautem Zustand der Kraftfahrzeugleuchte auf das Außengewinde aufgeschraubten Mutter und Karosserie können eine oder mehrere Unterleg- und/oder Dichtscheiben vorgesehen sein.

Die Innenwandung der sich koaxial zur Längsachse der Hohlschraube erstreckenden zentralen Öffnung ist zumindest zunächst vorzugsweise glatt ausgeführt.

In der zentralen Öffnung ist das hülsenförmige Klemmteil um die Längsachse der Hohlschraube drehbar angeordnet.

Das hülsenförmige Klemmteil weist eine koaxial zur Längsachse der Hohlschraube verlaufende, durchgehende Axialöffnung auf, deren Innendurchmesser kleiner ist, als der Außendurchmesser der ersten Gewindepartie des Gewindebolzens.

Eine die Axialöffnung begrenzende Wandung kann mit einem mit der ersten Gewindepartie korrespondierenden Innengewinde versehen sein. Alternativ kann die die Axialöffnung begrenzende Wandung zunächst frei von einem Innengewinde ausgeführt sein, welches dann beim Aufschrauben auf die erste Gewindepartie des Gewindebolzens in die die Axialöffnung begrenzende Wandung des Klemmteils geschnitten wird.

Das Klemmteil weist damit in zusammengabautem Zustand der Vorrichtung ein mit der ersten Gewindepartie des Gewindebolzens korrespondierendes Innengewinde an dessen die Axialöffnung begrenzender Wandung auf.

Die kleinere Ausführung des Innendurchmessers der Axialöffnung als des Außendurchmessers der ersten Gewindepartie des Gewindebolzens und/oder die Selbstschneidung des Innengewindes verhindern eine Selbstverstellung des Klemmteils gegenüber dem Gewindebolzen.

Das Klemmteil kann in Bezug auf die zentrale Öffnung als Passung in radialer Richtung ausgeführt sein, welche ein zur Drehung des Klemmteils gegenüber der Hohlschraube um deren Längsachse erforderliches Drehmoment vorgibt.

Die Passung kann als eine Presspassung ausgeführt sein.

Die Passung verhindert zusätzlich eine Selbstverstellung des Klemmteils gegenüber dem Gewindebolzen.

Das Klemmteil ist in Axialrichtung parallel zur Längsachse der Hohlschraube formschlüssig angeordnet.

Zur formschlüssigen Anordnung kann das Klemmteil an seinem einen Ende einen Flansch aufweisen, der einen Durchmesser aufweist, der größer ist, als die zentrale Öffnung der Hohlschraube und der kleiner ist, als der Durchmesser des Außengewindes der Hohlschraube.

Der Flansch ist in montiertem Zustand der Vorrichtung der Kraftfahrzeugleuchte bzw. deren Leuchtengehäuse abgewandt.

Am gegenüberliegenden Ende kann das Klemmteil zur formschlüssigen Anordnung Rastmittel aufweisen, welche bei in der Hohlschraube angeordnetem Klemmteil von der zentralen Öffnung her die Hohlschraube radial hintergreifen. Der Durchmesser der Rastmittel ist hierzu größer ausgeführt, als die zentrale Öffnung der Hohlschraube. Der Durchmesser der Rastmittel kann hierbei ebenfalls kleiner sein, als der Durchmesser des Außengewindes der Hohlschraube.

Die Rastmittel umfassen beispielsweise eine oder mehrere Rastnasen, welche radial nach innen zur Axialöffnung hin federnd ausgeführt sein können. Alternativ ist eine reversibel deformierbare Ausgestaltung der Rastmittel denkbar.

Das Klemmteil, beispielsweise dessen gegebenenfalls vorgesehener Flansch, umfasst einen Ansatz, der eine in Eingriff mit einem Werkzeug bringbare Formgebung aufweist, um das Klemmteil gegenüber der Hohlschraube zu drehen.

Der Ansatz ist in montiertem Zustand der Vorrichtung der Kraftfahrzeugleuchte bzw. deren Leuchtengehäuse abgewandt und erstreckt sich damit in Richtung des Außengewindes der Hohlschraube.

Das Klemmteil besteht vorzugsweise aus einem Kunststoff oder einer Kunststoffmischung, beispielsweise aus Nylon.

Die Vorrichtung umfasst darüber hinaus einen an der Kraftfahrzeugleuchte, vorzugsweise an deren Leuchtengehäuse festgelegten Anschlag und mindestens eine im Bund der Hohlschraube angeordneten Anschlagnut.

In zusammengebautem Zustand greift der Anschlag zur Drehmomentabstützung in die Anschlagnut ein.

Der Anschlag kann als eine beispielsweise auf dem Leuchtengehäuse aufstehende, sich vorzugsweise radial zur Längsachse der Hohlschraube erstreckende Rippe ausgeführt sein.

Auf der dem Außengewinde der Hohlschraube zugewandten Seite des Bunds kann eine Dichtscheibe vorgesehen sein.

Der Bund umfasst an dessen dem Außengewinde abgewandter Seite einen sich koaxial zur Längsachse erstreckenden Hohlzylinder, in dem die mindestens eine Anschlagnut angeordnet ist. Die mindestens eine Anschlagnut erstreckt sich hierbei parallel zur Längsachse der Hohlschraube in der Mantelfläche des Hohlzylinders. Die mindestens eine Anschlagnut ist bevorzugt als ein in Umfangsrichtung der Mantelfläche beidseitig durch Ränder begrenzter Schlitz mit beispielsweise geraden, parallel oder schräg zur Längsachse der Hohlschraube verlaufenden Rändern ausgeführt. Im Falle von schräg verlaufenden Rändern sind diese in Richtung weg vom Bund in Richtung zum Anschlag hin bzw. vom Außengewinde weg divergierend vorgesehen, so dass der Schlitz auf seiner dem Bund zugewandten Seite eine kleinere Abmessung in Umfangsrichtung aufweist, als auf seiner vom Bund abgewandten Seite.

Die dem Bund abgewandte Stirnseite der Mantelfläche des Hohlzylinders weist bei Drehung der Hohlschraube um deren Längsachse von Anschlagnut zu Anschlagnut eine Ganghöhe auf, welche beispielsweise der doppelten Gewindesteigung der dem Klemmteil zugeordneten ersten Gewindepartie des Gewindebolzens entsprechen kann.

An der mit einer zuvor beschriebenen Vorrichtung ausgestattete Kraftfahrzeugleuchte, vorzugsweise an einem Leuchtengehäuse der Kraftfahrzeugleuchte, ist ein mit einer Anschlagnut des Bunds der Hohlschraube in Eingriff bringbarer Anschlag angeordnet.

Die Kraftfahrzeugleuchte ist vorzugsweise als eine Heckleuchte ausgeführt.

Ein zweiter Gegenstand der Erfindung betrifft ein Verfahren zur Anordnung und Einstellung einer zuvor beschriebenen Vorrichtung an einer Kraftfahrzeugleuchte.

Das Verfahren sieht vor, zunächst die Vorrichtung an der Kraftfahrzeugleuchte anzuordnen, indem die Vorrichtung an der Kraftfahrzeugleuchte montiert wird.

Die Vorrichtung wird montiert, indem zunächst der Gewindebolzen an der Kraftfahrzeugleuchte, vorzugsweise an deren Leuchtengehäuse festgelegt wird.

Dies kann geschehen, indem ein als Stockschraube ausgeführter Gewindebolzen mit dessen zweiter Gewindepartie in eine entsprechende Ausnehmung an der Kraftfahrzeugleuchte, vorzugsweise an deren Leuchtengehäuse, eingeschraubt wird.

Alternativ kann dies durch Einkleben in eine entsprechende Ausnehmung an der Kraftfahrzeugleuchte, vorzugsweise an deren Leuchtengehäuse geschehen, wie dies beispielsweise durch EP 2 133 235 A2 bekannt ist.

Anschließend wird die Hohlschraube mit dem in deren zentraler Öffnung angeordneten Klemmteil mit dem Bund voraus auf die erste Gewindepartie des Gewindebolzens aufgeschraubt, bis der an der Kraftfahrzeugleuchte, vorzugsweise an deren Leuchtengehäuse festgelegte Anschlag in eine Anschlagnut am Bund eingreift.

Der Flansch mit dem Ansatz des Klemmteils befindet sich hierbei am dem Bund abgewandten Ende der Hohlschraube, wohingegen sich die Rastmittel des Klemmteils am dem Bund zugewandten Ende der Hohlschraube befinden.

Das Aufschrauben erfolgt durch Drehung des Klemmteils gegenüber der ersten Gewindepartie des Gewindebolzens. Das Drehen des Klemmteils erfolgt entweder durch Drehen der Hohlschraube, vorausgesetzt ein durch eine Passung in radialer Richtung zwischen Klemmteil und zentraler Öffnung der Hohlschraube vorgegebenes, zur Drehung des Klemmteils gegenüber der Hohlschraube um deren Längsachse erforderliches Drehmoment ist höher, als ein zum Aufschrauben des Klemmteils auf die erste Gewindepartie des Gewindebolzens notwendiges Drehmoment, oder vermittels eines in Eingriff mit dem Ansatz des Flansches des Klemmteils bringbaren Werkzeugs.

Hiernach ist die Montage der Vorrichtung vollendet, hieran anschließend findet eine Einstellung der Position des Außengewindes und des dieses begrenzenden Bunds in Axialrichtung zur Längsachse der Hohlschraube entlang des Gewindebolzens statt.

Zur Einstellung der Vorrichtung wird vermittels eines in Eingriff mit dem Ansatz des Flansches des Klemmteils bringbaren Werkzeugs das Klemmteil gedreht. Durch Drehung des Klemmteils gegenüber der ersten Gewindepartie des Gewindebolzens wird die Position des Außengewindes und des dieses begrenzenden Bunds in Axialrichtung zur Längsachse der Hohlschraube entlang des Gewindebolzens eingestellt.

Hierdurch kann eine Einstellung der Hohlschraube in Axialrichtung gegenüber dem Gewindebolzen in eingebautem Zustand vorgenommen werden.

Hierbei wird durch den Eingriff von Anschlag und Anschlagnut ein Verdrehen der Hohlschraube gegenüber dem Gewindebolzen verhindert.

Vorteile ergeben sich dadurch, dass hierdurch ein beliebiges Anzugsmoment einer auf das Außengewinde der Hohlschraube aufzuschraubenden Mutter aufgebracht werden kann, ohne die Hohlschraube gegenüber dem Gewindebolzen zu verdrehen und damit ohne die Einstellung der Hohlschraube gegenüber dem Gewindebolzen zu beeinflussen.

Die Erfindung erlaubt die Verbesserung der Einstellung und Befestigung von Kraftfahrzeugleuchten in hierfür vorgesehenen Einbauöffnungen in Karosserien von Kraftfahrzeugen.

Die Vorrichtung bildet zusammen mit dem gehäusefesten Anschlag ein entkoppeltes Einstell- Befestigungssystem, welches unabhängig von einem zur Befestigung einer Kraftfahrzeugleuchte in einer Einbauöffnung einer Karosserie eines Kraftfahrzeugs auf eine auf das Außengewinde aufgeschraubte Mutter aufzubringenden Drehmoment eine zuverlässige Beibehaltung einer vorgenommenen Einstellung sicherstellt.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: eine an einer Kraftfahrzeugleuchte festgelegte Vorrichtung zur wenigstens teilweise Befestigung einer Kraftfahrzeugleuchte in einer Einbauöffnung einer Karosserie eines Kraftfahrzeugs in einem längs der Längsachse der Hohlschraube verlaufenden Längsschnitt.
- Fig. 2: einen Teil der Vorrichtung zur wenigstens teilweise Befestigung einer Kraftfahrzeugleuchte in einer Einbauöffnung einer Karosserie eines Kraftfahrzeugs aus Fig. 1, ohne den kraftfahrzeugleuchtenseitig festgelegten Anschlag in einem längs der Längsachse der Hohlschraube verlaufenden Längsschnitt.
- Fig. 3: die Hohlschraube der Vorrichtung zur wenigstens teilweise Befestigung einer Kraftfahrzeugleuchte in einer Einbauöffnung einer Karosserie eines Kraftfahrzeugs aus Fig. 1, in einem längs der Längsachse der Hohlschraube verlaufenden Längsschnitt.
- Fig. 4: die Hohlschraube aus Fig. 3 entlang deren Längsachse mit Blick auf die dem Außengewinde abgewandte Seite deren Bundes gesehen.
- Fig. 5: den Gewindebolzen der Vorrichtung zur wenigstens teilweise Befestigung einer Kraftfahrzeugleuchte in einer Einbauöffnung einer Karosserie eines Kraftfahrzeugs aus Fig. 1, in einem Längsschnitt längs der in montiertem Zustand koaxial zur Längsachse der Hohlschraube verlaufenden Längsachse des Gewindebolzens.
- Fig. 6: das Klemmteil der Vorrichtung zur wenigstens teilweise Befestigung einer Kraftfahrzeugleuchte in einer Einbauöffnung einer Karosserie eines Kraftfahrzeugs aus Fig. 1, in einem Längsschnitt längs der in montiertem Zustand koaxial zur Längsachse der Hohlschraube verlaufenden Längsachse des Klemmteils.
- Fig. 7: das Klemmteil aus Fig. 6 entlang deren Längsachse mit Blick auf deren Ansatz gesehen.

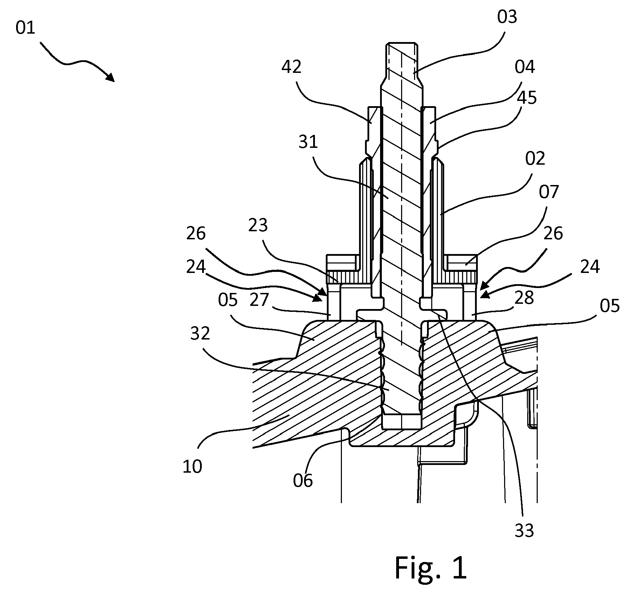

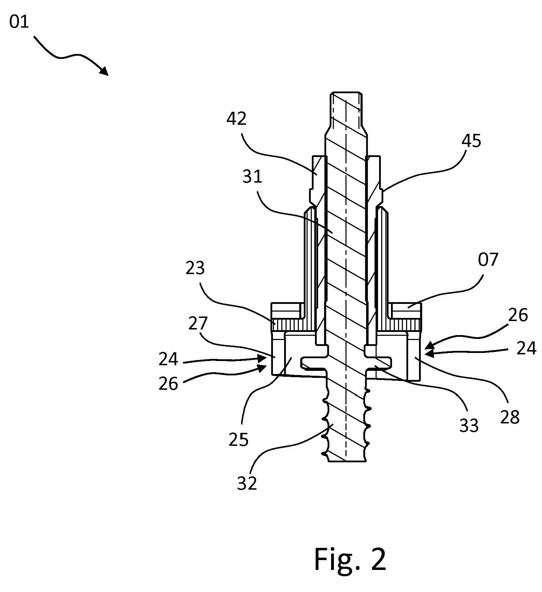

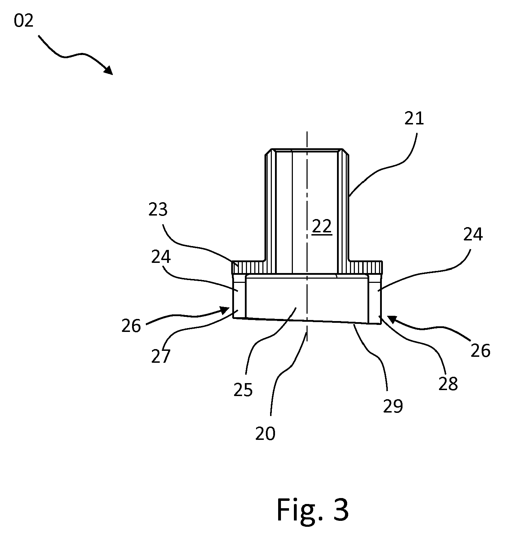

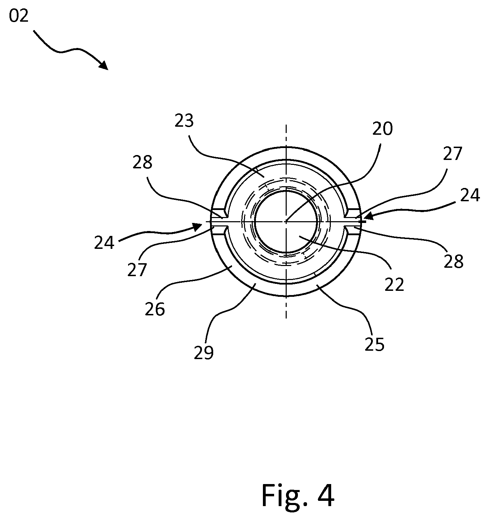

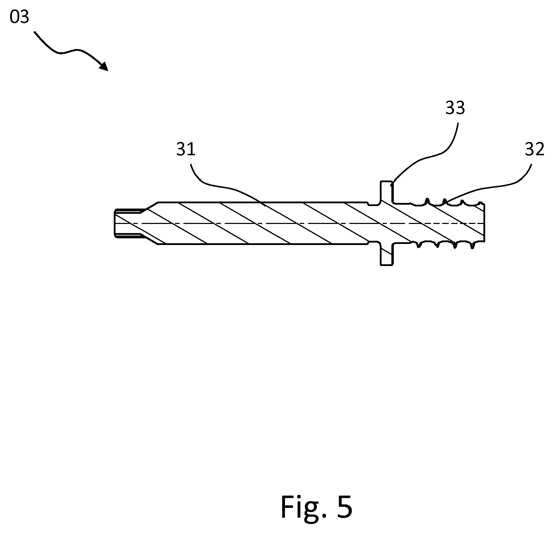

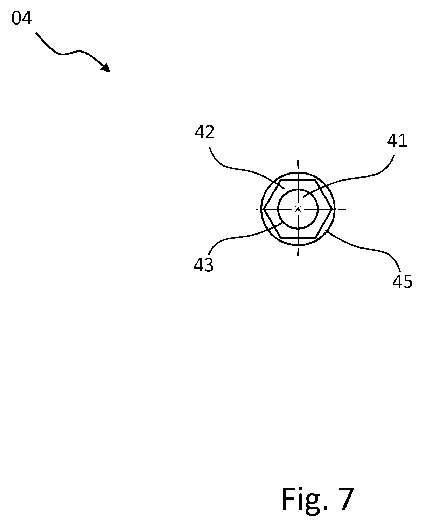

Eine in den Fig. 1 bis Fig. 7 ganz oder in Teilen dargestellte Vorrichtung 01 zur wenigstens teilweise Befestigung einer Kraftfahrzeugleuchte in einer Einbauöffnung einer Karosserie eines Kraftfahrzeugs umfasst:
- eine Hohlschraube 02 mit einem Außengewinde 21 und einer sich koaxial zur Längsachse 20 der Hohlschraube erstreckenden zentralen Öffnung 22,
- einen an der Kraftfahrzeugleuchte, vorzugsweise an einem Leuchtengehäuse 10 der Kraftfahrzeugleuchte festlegbaren oder festgelegten Gewindebolzen 03 mit einer ersten, durch die zentrale Öffnung 22 hindurchreichenden Gewindepartie 31, sowie
- ein in der zentralen Öffnung 22 auf der ersten Gewindepartie 31 koaxial zwischen Hohlschraube 02 und dem Gewindebolzen 03 angeordnetes hülsenförmiges Klemmteil 04.

Die Hohlschraube 02 weist einen einseitig des Außengewindes 21 angeordneten, radial von der Hohlschraube 02 abstehenden Bund 23 auf, welcher in montiertem Zustand der Vorrichtung 01 der Kraftfahrzeugleuchte bzw. deren Leuchtengehäuse 10 zugewandt ist.

Das hülsenförmige Klemmteil 04 ist in der zentralen Öffnung 22 um die Längsachse 20 der Hohlschraube 02 drehbar angeordnet.

Das hülsenförmige Klemmteil 04 ist in Axialrichtung parallel zur Längsachse 20 der Hohlschraube 02 formschlüssig angeordnet.

Das hülsenförmige Klemmteil 04 weist eine koaxial zur Längsachse 20 der Hohlschraube 02 verlaufende, durchgehende Axialöffnung 41 auf, deren kleinster Innendurchmesser kleiner ist, als der größte Außendurchmesser der ersten Gewindepartie 31 des Gewindebolzens 03.

Die kleinere Ausführung des Innendurchmessers der Axialöffnung 41 des Klemmteils 04 als des Außendurchmessers der ersten Gewindepartie 31 des Gewindebolzens 03 verhindert eine Selbstverstellung des Klemmteils 04 gegenüber dem Gewindebolzen 03.

Das hülsenförmige Klemmteil 04 umfasst einen Ansatz 42, der eine in Eingriff mit einem Werkzeug bringbare Formgebung aufweist, um das Klemmteil 04 gegenüber der Hohlschraube 02 zu drehen. Der Ansatz 42 ist in montiertem Zustand der Vorrichtung 01 der Kraftfahrzeugleuchte bzw. deren Leuchtengehäuse 10 abgewandt. Der Ansatz 42 erstreckt sich demnach in Richtung des Außengewindes 21 der Hohlschraube 02.

Im Bund 23 der Hohlschraube 02 ist mindestens eine Anschlagnut 24 angeordnet.

Darüber hinaus ist an der Kraftfahrzeugleuchte, vorzugsweise an deren Leuchtengehäuse 10 festgelegten, mit der mindestens einen Anschlagnut 24 korrespondierender Anschlag 05 vorgesehen, der in zusammengebautem Zustand der Vorrichtung 01 zur Drehmomentabstützung in mindestens eine Anschlagnut 24 eingreift.

Das Außengewinde 21 dient der zumindest teilweisen Befestigung der Kraftfahrzeugleuchte in einer Einbauöffnung einer Karosserie eines Kraftfahrzeugs vermittels einer oder mehrerer von der der Einbauöffnung abgewandten Rückseite der Karosserie auf das Außengewinde 21 aufzuschraubenden Mutter. Die Einschränkung, wonach das Außengewinde 21 einer zumindest teilweisen Befestigung der Kraftfahrzeugleuchte in einer Einbauöffnung einer Karosserie eines Kraftfahrzeugs dient, ist hierbei dahingehend zu verstehen, dass mehr als eine beschriebene Vorrichtung 01 zur Befestigung einer Kraftfahrzeugleuchte in einer Einbauöffnung einer Karosserie eines Kraftfahrzeugs vorgesehen sein können.

Der Gewindebolzen 03 kann wie in Fig. 1, Fig. 2 und Fig. 5 dargestellt als eine auch als Doppelgewindebolzen bezeichnete Stockschraube ausgeführt sein, welche zusätzlich zu der ersten Gewindepartie 31 eine zum Einschrauben in eine hierfür vorgesehene Ausnehmung 06 an der Kraftfahrzeugleuchte, vorzugsweise an deren Leuchtengehäuse 10, vorgesehene zweite Gewindepartie 32 aufweist.

Die erste Gewindepartie 31 kann beispielsweise durch einen radial abstehenden Flansch 33 von der zweiten Gewindepartie 32 abgegrenzt sein.

Der Flansch 33 begrenzt eine maximale Einschraubtiefe des als Stockschraube ausgeführten Gewindebolzens 03 einer hierfür vorgesehenen Ausnehmung 06 an der Kraftfahrzeugleuchte, vorzugsweise an deren Leuchtengehäuse 10.

Das Klemmteil 04 kann wenigstens in zusammengebautem Zustand der Vorrichtung 01 an einer deren Axialöffnung 41 begrenzenden Wandung 43 ein mit der ersten Gewindepartie 31 des Gewindebolzens 03 korrespondierendes Innengewinde 44 aufweisen.

Die Wandung 43, welche die sich koaxial zur Längsachse 20 der Hohlschraube 02 erstreckende Axialöffnung 41 des Klemmteils 04 begrenzt, kann zumindest zunächst glatt ausgeführt sein.

Die die Axialöffnung 41 des Klemmteils 04 begrenzende Wandung 43 kann alternativ mit einem mit der ersten Gewindepartie 31 korrespondierenden Innengewinde 44 versehen hergestellt sein.

Vorzugsweise ist jedoch die die Axialöffnung 41 des Klemmteils 04 begrenzende Wandung 43 zunächst frei von einem Innengewinde 44 ausgeführt, welches dann beim Aufschrauben auf die erste Gewindepartie 31 des Gewindebolzens 03 in die die Axialöffnung 41 begrenzende Wandung 43 des Klemmteils 04 geschnitten wird.

Die Selbstschneidung des Innengewindes 44 verhindert zusätzlich eine Selbstverstellung des Klemmteils 04 gegenüber dem Gewindebolzen 03.

Das Klemmteil 04 kann in Bezug auf die zentrale Öffnung 22 der Hohlschraube 02 als Passung in radialer Richtung ausgeführt sein, welche ein zur Drehung des Klemmteils 04 gegenüber der Hohlschraube 02 um deren Längsachse 20 erforderliches Drehmoment vorgibt.

Die Passung kann als eine Presspassung ausgeführt sein.

Die Passung verhindert nochmals eine Selbstverstellung des Klemmteils 04 gegenüber dem Gewindebolzen 03, wie anhand der nachfolgend noch beschriebenen Funktionsweise der Einstellung der Vorrichtung 01 deutlich wird.

Das Klemmteil 04 kann zur formschlüssigen Anordnung in Axialrichtung parallel zur Längsachse 20 der Hohlschraube 02 an einem dem Ansatz 42 zugewandten ersten Ende einen Flansch 45 umfassen, der einen Durchmesser aufweist, der größer ist, als die zentrale Öffnung 22 der Hohlschraube 02 und der kleiner ist, als der Durchmesser des Außengewindes 21 der Hohlschraube 02.

Der Ansatz 42 kann den Flansch 45 umfassen oder der Ansatz 42 kann von dem Flansch 45 umfasst sein.

Der Ansatz 42 sowie der gegebenenfalls vorgesehene Flansch 45 sind in montiertem Zustand der Vorrichtung 01 der Kraftfahrzeugleuchte bzw. deren Leuchtengehäuse 10 abgewandt. Der Ansatz 42 erstreckt sich damit in Richtung des Außengewindes 21 der Hohlschraube 02 weg von deren Bund 23.

Das Klemmteil 04 kann zur formschlüssigen Anordnung in Axialrichtung darüber hinaus parallel zur Längsachse 20 der Hohlschraube 02 an einem dem Ansatz 42 abgewandten, dem ersten Ende gegenüberliegenden zweiten Ende Rastmittel 46 aufweisen, welche bei in der Hohlschraube 02 angeordnetem Klemmteil 04 von der zentralen Öffnung 22 der Hohlschraube 02 her die Hohlschraube 02 radial hintergreifen.

Die Rastmittel 46 weisen eine Abmessung in radialer Richtung auf, die größer als die zentrale Öffnung 22 der Hohlschraube 02 ist. Die Rastmittel 46 können außerdem eine Abmessung in radialer Richtung aufweisen, die kleiner ist, als der Durchmesser des Außengewindes 21 der Hohlschraube 02.

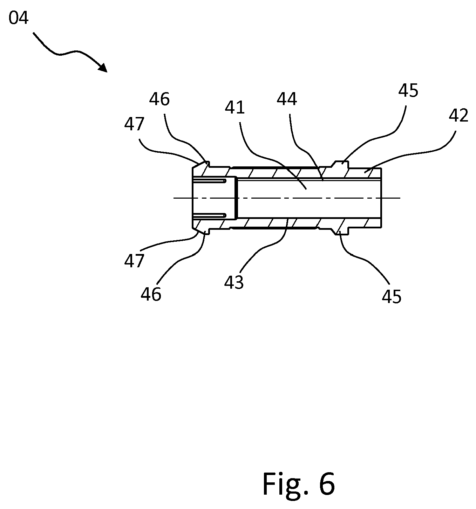

Die Rastmittel 46 können wie in Fig. 6 dargestellt mindestens eine Rastnase 47 umfassen, welche radial nach innen zur Axialöffnung 41 hin federnd ausgeführt ist.

Alternativ ist eine reversibel deformierbare Ausgestaltung der Rastmittel 46 denkbar.

Das Klemmteil 04 ist vorzugsweise aus einem Kunststoff oder einer Kunststoffmischung hergestellt, beispielsweise aus Nylon.

Der Bund 23 der Hohlschraube 02 kann an dessen dem Außengewinde 21 abgewandter Seite einen sich koaxial zur Längsachse 20 erstreckenden Hohlzylinder 25 umfassen, in dessen Mantelfläche 26 sich parallel zur Längsachse 20 der Hohlschraube 02 die mindestens eine Anschlagnut 24 erstreckt.

Die mindestens eine Anschlagnut 24 kann als ein in Umfangsrichtung der Mantelfläche 26 beidseitig durch Ränder 27, 28 begrenzter Schlitz mit beispielsweise geraden, parallel und/oder schräg zur Längsachse 20 der Hohlschraube 02 verlaufenden Rändern 27, 28 ausgeführt sein. Im Falle von schräg verlaufenden Rändern 27, 28 sind diese in Richtung weg vom Bund 23 in Richtung zum Anschlag 05 hin bzw. vom Außengewinde 21 weg divergierend vorgesehen, so dass der Schlitz auf seiner dem Bund 23 zugewandten Seite eine kleinere Abmessung in Umfangsrichtung aufweist, als auf seiner vom Bund 23 abgewandten Seite.

Die dem Bund 23 abgewandte Stirnseite 29 der Mantelfläche 26 des Hohlzylinders 25 kann bei Drehung der Hohlschraube 02 um deren Längsachse 20 von Anschlagnut 24 zu Anschlagnut 24 eine Ganghöhe aufweisen, welche beispielsweise der doppelten Gewindesteigung der dem Klemmteil 04 zugeordneten ersten Gewindepartie 31 des Gewindebolzens 03 entsprechen kann. Hierdurch weisen die eine Anschlagnut 24 begrenzenden Ränder 27, 28 einen der Ganghöhe proportionalen Versatz auf, so dass von zwei eine Anschlagnut 24 begrenzenden Rändern 27, 28 der Mantelfläche 26 der in Eindrehrichtung der Hohlschraube 02 auf den Gewindebolzen 03 vorauslaufende Rand 27 einen geringeren Abstand zum Bund 23 axial entlang der Längsachse 20 der Hohlschraube 02 gesehen auf, als der in Eindrehrichtung der Hohlschraube 02 auf den Gewindebolzen 03 nachlaufende Rand 28.

Beim Aufschrauben der Hohlschraube 02 auf den Gewindebolzen 03 schlägt damit der Hohlzylinder 25 automatisch mit dem nachlaufenden Rand 28 an den kraftfahrzeugleuchtenfesten Anschlag 05 an, wodurch Anschlag 05 und Anschlagnut 24 automatisch korrekt ineinander greifen und durch Drehen des Klemmteils tiefer in gegenseitigen Eingriff gebracht werden können, ohne die Drehlage der Hohlschraube nachjustieren zu müssen. Dies ermögliche eine Automatisierung der Montage der Vorrichtung 01 an einer Kraftfahrzeugleuchte.

Der Anschlag 05 kann als eine beispielsweise auf dem Leuchtengehäuse 10 aufstehende, sich vorzugsweise radial zur Längsachse 20 der Hohlschraube 02 erstreckende Rippe ausgeführt sein (Fig. 1).

Auf der dem Außengewinde 21 der Hohlschraube 02 zugewandten Seite des Bunds 23 kann eine Dichtscheibe 07 vorgesehen sein.

Eine zuvor beschriebene Vorrichtung 01 kann Teil einer Kraftfahrzeugleuchte sein oder von einer Kraftfahrzeugleuchte umfasst sein. An der Kraftfahrzeugleuchte sind hierzu beispielsweise als Einschraub- und/oder Einklebeaufnahmen ausgeführte Mittel zur Festlegung mindestens eines Gewindebolzens 03 sowie mindestens ein mit einer Anschlagnut 24 eines Bunds 23 einer Hohlschraube 02 in Eingriff bringbarer Anschlag 05 angeordnet. Die Mittel zur Festlegung mindestens eines Gewindebolzens 03 können beispielsweise einer oder mehrere an einem Leuchtengehäuse 10 der Kraftfahrzeugleuchte vorgesehene Ausnehmungen 06 umfassen.

Die Kraftfahrzeugleuchte kann als eine Heckleuchte ausgebildet sein.

Ein Verfahren zur Anordnung und Einstellung einer zuvor beschriebenen Vorrichtung 01 zur wenigstens teilweise Befestigung einer Kraftfahrzeugleuchte in einer Einbauöffnung einer Karosserie eines Kraftfahrzeugs an einer Kraftfahrzeugleuchte sieht vorzugsweise vor, dass:
- zunächst der Gewindebolzen 03 an der Kraftfahrzeugleuchte, vorzugsweise an deren Leuchtengehäuse 10 festgelegt wird,
- anschließend die Hohlschraube 02 mit dem in deren zentraler Öffnung 22 angeordneten Klemmteil 04 mit dem Bund 23 voraus auf die erste Gewindepartie 31 des Gewindebolzens 03 aufgeschraubt wird, bis der an der Kraftfahrzeugleuchte, vorzugsweise an deren Leuchtengehäuse 10 festgelegte Anschlag 05 in eine Anschlagnut 24 am Bund 23 eingreift,
- dann nach der so vollendeten Montage der Vorrichtung 01, eine Einstellung der Position des Außengewindes 21 und des dieses begrenzenden Bunds 23 der Hohlschraube 02 in Axialrichtung zur Längsachse 20 der Hohlschraube 02 entlang des Gewindebolzens 03 stattfindet, indem zur Einstellung der Vorrichtung 01 vermittels eines in Eingriff mit dem Ansatz 42 des Klemmteils 04 bringbaren Werkzeugs das Klemmteil 04 gedreht wird, wobei durch Drehung des Klemmteils 04 gegenüber der ersten Gewindepartie 31 des Gewindebolzens 03 die Position des Außengewindes 21 und des dieses begrenzenden Bunds 23 in Axialrichtung zur Längsachse 20 der Hohlschraube 02 entlang des Gewindebolzens 03 eingestellt wird.

Der Gewindebolzen 03 kann an der Kraftfahrzeugleuchte, vorzugsweise an deren Leuchtengehäuse 10 festgelegt werden, indem ein als Stockschraube ausgeführter Gewindebolzen 03 mit dessen zweiter Gewindepartie 32 in eine entsprechende Ausnehmung 06 an der Kraftfahrzeugleuchte, vorzugsweise an deren Leuchtengehäuse 10, eingeschraubt wird.

Alternativ ist auch ein Einkleben in eine entsprechende Ausnehmung 06 an der Kraftfahrzeugleuchte, vorzugsweise an deren Leuchtengehäuse 10 denkbar, wie dies beispielsweise durch EP 2 133 235 A2 bekannt ist.

Der Ansatz 42 des Klemmteils 04 befindet sich hierbei vorzugsweise am dem Bund 23 abgewandten Ende der Hohlschraube 02, wohingegen sich die Rastmittel 46 des Klemmteils 04 bevorzugt am dem Bund 23 zugewandten Ende der Hohlschraube 02 befinden.

Das Aufschrauben erfolgt durch Drehung des Klemmteils 04 gegenüber der ersten Gewindepartie 31 des Gewindebolzens 03. Das Drehen des Klemmteils 04 erfolgt entweder durch Drehen der Hohlschraube 02, vorausgesetzt ein beispielsweise durch eine Passung in radialer Richtung zwischen Klemmteil 04 und zentraler Öffnung 22 der Hohlschraube 02 vorgegebenes, zur Drehung des Klemmteils 04 gegenüber der Hohlschraube 02 um deren Längsachse 20 erforderliches Drehmoment ist höher, als ein zum Aufschrauben des Klemmteils 04 auf die erste Gewindepartie 31 des Gewindebolzens 03 notwendiges Drehmoment, oder vermittels eines in Eingriff mit dem Ansatz 42 des Klemmteils 04 bringbaren Werkzeugs.

Die Vorrichtung 01 bildet zusammen mit dem beispielsweise gehäusefesten Anschlag 05 ein entkoppeltes Einstell- Befestigungssystem, welches unabhängig von einem zur Befestigung einer Kraftfahrzeugleuchte in einer Einbauöffnung einer Karosserie eines Kraftfahrzeugs auf eine auf das Außengewinde 21 aufgeschraubte Mutter aufzubringenden Drehmoment eine zuverlässige Beibehaltung einer vorgenommenen Einstellung sicherstellt.

Die Erfindung ist insbesondere im Bereich der Herstellung von Kraftfahrzeugen und Kraftfahrzeugleuchten gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Hohlschraube
- 03: Gewindebolzen
- 04: Klemmteil
- 05: Anschlag
- 06: Ausnehmung
- 07: Dichtscheibe
- 10: Leuchtengehäuse
- 20: Längsachse der Hohlschraube 02
- 21: Außengewinde der Hohlschraube 02
- 22: zentrale Öffnung der Hohlschraube 02
- 23: Bund der Hohlschraube 02
- 24: Anschlagnut am Bund 23 der Hohlschraube 02
- 25: Hohlzylinder am Bund 23 der Hohlschraube 02
- 26: Mantelfläche des Hohlzylinders 25 am Bund 23 der Hohlschraube 02
- 27: die Anschlagnut 24 in Umfangsrichtung begrenzender, vorlaufender Rand
- 28: die Anschlagnut 24 in Umfangsrichtung begrenzender, nachlaufender Rand
- 29: Stirnseite der Mantelfläche 25 des Hohlzylinders 25
- 31: erste Gewindepartie des Gewindebolzens 03
- 32: zweite Gewindepartie des Gewindebolzens 03
- 33: Flansch des Gewindebolzens 03
- 41: Axialöffnung des Klemmteils 04
- 42: Ansatz des Klemmteils 04
- 43: Wandung der Axialöffnung 41 des Klemmteils 04
- 44: Innengewinde des Klemmteils 04
- 45: Flansch des Klemmteils 04
- 46: Rastmittel des Klemmteils 04
- 47: Rastnase der Rastmittel 46 des Klemmteils 04

## Patentansprüche

1. Kraftfahrzeugleuchte mit einer Vorrichtung (01) zur wenigstens teilweise Befestigung der Kraftfahrzeugleuchte in einer Einbauöffnung einer Karosserie eines Kraftfahrzeugs, wobei an der Kraftfahrzeugleuchte Mittel zur Festlegung mindestens eines Gewindebolzens (03) angeordnet sind, wobei die Vorrichtung eine Hohlschraube (02) mit einem Außengewinde (21) und einer sich koaxial zur Längsachse (20) der Hohlschraube (02) erstreckenden zentralen Öffnung (22), einen an der Kraftfahrzeugleuchte festgelegten Gewindebolzen (03) mit einer ersten, durch die zentrale Öffnung (22) hindurchreichenden Gewindepartie (31), sowie ein in der zentralen Öffnung (22) auf der ersten Gewindepartie (31) koaxial zwischen Hohlschraube (02) und dem Gewindebolzen (03) angeordnetes hülsenförmiges Klemmteil (04) umfasst, wobei:
- die Hohlschraube (02) einen einseitig des Außengewindes (21) angeordneten, radial von der Hohlschraube (02) abstehenden Bund (23) aufweist, welcher in montiertem Zustand der Vorrichtung (01) der Kraftfahrzeugleuchte zugewandt ist,
- das Klemmteil (04) in der zentralen Öffnung (22) um die Längsachse (20) der Hohlschraube (02) drehbar angeordnet ist,
- das Klemmteil (02) in Axialrichtung parallel zur Längsachse (20) der Hohlschraube (02) formschlüssig angeordnet ist,
- das Klemmteil (04) eine koaxial zur Längsachse (20) der Hohlschraube (02) verlaufende, durchgehende Axialöffnung (41) aufweist, deren Innendurchmesser kleiner ist, als der Außendurchmesser der ersten Gewindepartie (31) des Gewindebolzens (03), und
- das Klemmteil (04) einen Ansatz (42) umfasst, der eine in Eingriff mit einem Werkzeug bringbare Formgebung aufweist, um das Klemmteil (04) gegenüber der Hohlschraube (02) zu drehen,
**dadurch gekennzeichnet, dass**:
- im Bund (23) der Hohlschraube (02) mindestens eine Anschlagnut (24) angeordnet ist, mindestens ein mit der mindestens einen Anschlagnut (24) des Bunds (23) der Hohlschraube (02) korrespondierender Anschlag (05), der in montiertem Zustand der Vorrichtung (01) zur Drehmomentabstützung in der mindestens einen Anschlagnut (24) eingreift, angeordnet ist,
- der Bund (23) an dessen dem Außengewinde (21) abgewandter Seite einen sich koaxial zur Längsachse (20) erstreckenden Hohlzylinder (25) umfasst, in dessen Mantelfläche (26) sich parallel zur Längsachse (20) der Hohlschraube (02) die mindestens eine Anschlagnut (24) erstreckt, und
- die dem Bund (23) abgewandte Stirnseite (29) der Mantelfläche (26) des Hohlzylinders (25) bei Drehung der Hohlschraube (02) um deren Längsachse (20) von Anschlagnut (24) zu Anschlagnut (24) eine Ganghöhe aufweist, so dass von zwei eine Anschlagnut (24) begrenzenden Rändern (27, 28) der Mantelfläche (26) der in Eindrehrichtung der Hohlschraube (02) auf den Gewindebolzen (03) vorauslaufende Rand (27) einen geringeren Abstand axial entlang der Längsachse (20) der Hohlschraube (02) gesehen zum Bund (23) aufweist, als der in Eindrehrichtung der Hohlschraube (02) auf den Gewindebolzen (03) nachlaufende Rand (28).

2. Kraftfahrzeugleuchte nach Anspruch 1, wobei der Gewindebolzen (03) als eine Stockschraube ausgeführt ist, welche zusätzlich zu der ersten Gewindepartie (31) eine zum Einschrauben in eine hierfür vorgesehene Ausnehmung (06) an der Kraftfahrzeugleuchte vorgesehene zweite Gewindepartie (32) aufweist.

3. Kraftfahrzeugleuchte nach Anspruch 1 oder 2, wobei das Klemmteil (04) an einer deren Axialöffnung (41) begrenzenden Wandung (43) ein mit der ersten Gewindepartie (31) des Gewindebolzens (03) korrespondierendes Innengewinde (44) aufweist.

4. Kraftfahrzeugleuchte nach Anspruch 1, 2 oder 3, wobei das Klemmteil (04) in Bezug auf die zentrale Öffnung (22) als Passung in radialer Richtung ausgeführt ist, welche ein zur Drehung des Klemmteils (04) gegenüber der Hohlschraube (04) um deren Längsachse (20) erforderliches Drehmoment vorgibt.

5. Kraftfahrzeugleuchte nach einem der voranstehenden Ansprüche, wobei das Klemmteil (04) zur formschlüssigen Anordnung in Axialrichtung parallel zur Längsachse (20) der Hohlschraube (02) an einem dem Ansatz (42) zugewandten Ende einen Flansch (45) umfasst, der einen Durchmesser aufweist, der größer ist, als die zentrale Öffnung (22) der Hohlschraube (02) und der kleiner ist, als der Durchmesser des Außengewindes (21) der Hohlschraube (02).

6. Kraftfahrzeugleuchte nach einem der voranstehenden Ansprüche, wobei das Klemmteil (04) zur formschlüssigen Anordnung in Axialrichtung parallel zur Längsachse (20) der Hohlschraube (02) an einem dem Ansatz (42) abgewandten Ende Rastmittel (46) aufweist, welche bei in der Hohlschraube (02) angeordnetem Klemmteil (04) von der zentralen Öffnung (22) her die Hohlschraube (02) radial hintergreifen und welche eine Abmessung in radialer Richtung in aufweisen, die größer als die zentrale Öffnung (22) der Hohlschraube (02) ist.

7. Kraftfahrzeugleuchte nach Anspruch 6, wobei die Rastmittel (46) mindestens eine Rastnase (47) umfassen, welche radial nach innen zur Axialöffnung (41) hin federnd ausgeführt ist.

8. Kraftfahrzeugleuchte nach einem der voranstehenden Ansprüche, wobei das Klemmteil (04) aus einem Kunststoff oder einer Kunststoffmischung besteht.

9. Kraftfahrzeugleuchte nach einem der voranstehenden Ansprüche, wobei die mindestens eine Anschlagnut (24) als ein in Umfangsrichtung der Mantelfläche (26) beidseitig durch Ränder (27, 28) begrenzter Schlitz mit parallel und/oder schräg zur Längsachse (20) der Hohlschraube (02) verlaufenden Rändern (27, 28) ausgeführt ist.

10. Kraftfahrzeugleuchte nach einem der voranstehenden Ansprüche, wobei der Anschlag (05) als eine Rippe ausgeführt ist.

11. Kraftfahrzeugleuchte nach einem der voranstehenden Ansprüche, wobei die Kraftfahrzeugleuchte als Heckleuchte ausgebildet ist.

12. Verfahren zur Anordnung und Einstellung einer Vorrichtung (01) zur wenigstens teilweise Befestigung einer Kraftfahrzeugleuchte in einer Einbauöffnung einer Karosserie eines Kraftfahrzeugs an einer Kraftfahrzeugleuchte nach einem der Ansprüche 1 bis 11, wobei:
- zunächst der Gewindebolzen (03) an der Kraftfahrzeugleuchte festgelegt wird,
- anschließend die Hohlschraube (02) mit dem in deren zentraler Öffnung (22) angeordneten Klemmteil (04) mit dem Bund (23) voraus auf die erste Gewindepartie (31) des Gewindebolzens (03) aufgeschraubt wird, bis der an der Kraftfahrzeugleuchte festgelegte Anschlag (05) in eine Anschlagnut (24) am Bund (23) eingreift,
- dann eine Einstellung der Position des Außengewindes (21) und des dieses begrenzenden Bunds (23) in Axialrichtung zur Längsachse (20) der Hohlschraube (02) entlang des Gewindebolzens (03) stattfindet, wobei durch Drehung des Klemmteils (04) gegenüber der ersten Gewindepartie (31) des Gewindebolzens (03) die Position des Außengewindes (21) und des dieses begrenzenden Bunds (23) in Axialrichtung zur Längsachse (20) der Hohlschraube (02) entlang des Gewindebolzens (03) eingestellt wird.

## Claims

1. A motor vehicle lamp with a device (01) for at least partially fastening the motor vehicle lamp in an installation opening of a body of a vehicle, wherein means for fixing at least one threaded bolt (03) are arranged at the motor vehicle lamp, wherein the device comprises a hollow screw (02) with an external thread (21) and a central opening (22), which extends coaxially to the longitudinal axis (20) of the hollow screw (02), a threaded bolt (03), which is fixed at the motor vehicle lamp, with a first thread section (31) extending through the central opening (22), as well as a sleeve-shaped clamping unit (04), which is arranged in the central opening (22) over the first thread section (31) coaxially between the hollow screw (02) and the threaded bolt (03), wherein:
- the hollow screw (02) has a collar (23) arranged on one side of the external thread (21) and projecting radially from the hollow screw (02), which collar (23) in a mounted state of the device (01) faces toward the motor vehicle lamp,
- the clamping unit (04) is arranged in the central opening (22) to be rotatable about the longitudinal axis (20) of the hollow screw (02),
- the clamping unit (04) is arranged form-lockingly in axial direction in parallel to the longitudinal axis (20) of the hollow screw (02),
- the clamping unit (04) has a continuous, axial opening (41) extending coaxially to the longitudinal axis (20) of the hollow screw (02), the inside diameter of which axial opening (41) is smaller than the outside diameter of the first thread section (31) of the threaded bolt (03), and
- the clamping unit (04) comprises a shoulder (42), which has a design such that it can be brought into engagement with a tool in order to rotate the clamping unit (04) in relation to the hollow screw (02),
**characterised in that**:
- at least one stop groove (24) is arranged in the collar (23) of the hollow screw (02),
- at least one stop (05) is arranged corresponding with the at least one stop groove (24) of the collar (23) of the hollow screw (02), which stop (05) in a mounted state of the device (01) engages into the at least one stop groove (24) for the purpose of torque support,
- the collar (23), at its side averted from the external thread (21), comprises a hollow cylinder (25) extending coaxially to the longitudinal axis (20), in the shell surface (26) of which hollow cylinder (25) the at least one stop groove (24) extends in parallel to the longitudinal axis (20) of the hollow screw (02), and,
- when the hollow screw (02) is rotated about its longitudinal axis (20), the end face (29) of the shell surface (26) of the hollow cylinder (25), which end face (29) is averted from the collar (23), has a thread lead from stop groove (24) to stop groove (24) such that, of two edges (27, 28) of the shell surface (26) bounding a stop groove (24), the edge (27) that leads in the direction of screwing-in the hollow screw (02) onto the threaded bolt (03) has a smaller distance from the collar (23), as seen axially along the longitudinal axis (20) of the hollow screw (02), than the edge (28) that trails in the direction of screwing-in the hollow screw (02) onto the threaded bolt (03).

2. The motor vehicle lamp as recited in claim 1 wherein the threaded bolt (03) is designed as a hanger bolt, which, in addition to the first thread section (31), has a second thread section (32) provided for screwing-in into a recess (06) at the motor vehicle lamp provided for this purpose.

3. The motor vehicle lamp as recited in claim 1 or 2 wherein the clamping unit (04) has an internal thread (44) at a wall (43) bounding the axial opening (41) of the clamping unit (04), which internal thread (44) corresponds with the first thread section (31) of the threaded bolt (03).

4. The motor vehicle lamp as recited in claim 1, 2 or 3 wherein the clamping unit (04) is designed as fit in radial direction in relation to the central opening (22), which fit defines a torque required for rotating the clamping unit (04) about the longitudinal axis (20) of the hollow screw (04) in relation to the hollow screw (02).

5. The motor vehicle lamp as recited in one of the previous claims wherein the clamping unit (04), at an end facing toward the shoulder (42), comprises a flange (45) for the form-locking arrangement in axial direction in parallel to the longitudinal axis (20) of the hollow screw (02), which flange (45) has a diameter that is greater than the central opening (22) of the hollow screw (02) and that is smaller than the diameter of the external thread (21) of the hollow screw (02).

6. The motor vehicle lamp as recited in one of the previous claims wherein the clamping unit (04), at an end averted from the shoulder (42), has catching means (46) for the form-locking arrangement in axial direction in parallel to the longitudinal axis (20) of the hollow screw (02), which catch means (46) engage from the central opening radially behind the hollow screw (02) when the clamping unit (04) is arranged in the hollow screw (02), and which catch means (46) have dimensions in radial direction that are greater than the central opening (22) of the hollow screw (02).

7. The motor vehicle lamp as recited in claim 6 wherein the catch means (46) comprise at least one catch nose (47), which is of a resilient design such that it springs radially inward toward the axial opening (41).

8. The motor vehicle lamp as recited in one of the previous claims wherein the clamping unit (04) is composed of a synthetic material or of a synthetic material compound.

9. The motor vehicle lamp as recited in one of the previous claims wherein the at least one stop groove (24) is designed as a slot that is bounded on both sides in circumferential direction of the shell surface (26) by edges (27, 28), which run in parallel and/or diagonally to the longitudinal axis (20) of the hollow screw (02).

10. The motor vehicle lamp as recited in one of the previous claims wherein the stop (05) is designed as a rib.

11. The motor vehicle lamp as recited in one of the previous claims wherein the motor vehicle lamp is designed as a tail light.

12. A method for arranging and adjusting a device (01) at a motor vehicle lamp as recited in one of the claims 1 to 11, the device serving for at least partially fastening a motor vehicle lamp in an installation opening of a body of a vehicle, wherein:
- first the threaded bolt (03) is fixed to the motor vehicle lamp,
- subsequently, the hollow screw (02) with the clamping unit (04) arranged in its central opening (22) is screwed onto the first thread section (31) of the threaded bolt (03) with the collar (23) facing ahead until the stop (05), which is fixed on the motor vehicle lamp, engages into a stop groove (24) at the collar (23),
- then, an adjustment in axial direction to the longitudinal axis (20) of the hollow screw (02) along the threaded bolt (03) is carried out for the position of the external thread (21) and the collar (23) bounding it, wherein, by rotating the clamping unit (04) in relation to the first thread section (31) of the threaded bolt (03), the position of the external thread (21) and the collar (23) bounding it is adjusted in axial direction to the longitudinal axis (20) of the hollow screw (02) along the threaded bolt (03).

## Revendications

1. Lampe de véhicule automobile comprenant un dispositif (01) destiné à fixer au moins en partie ladite lampe de véhicule automobile dans une ouverture de montage d'une carrosserie d'un véhicule automobile, des moyens de fixation d'au moins un boulon fileté (03) étant disposés sur la lampe de véhicule automobile, ledit dispositif comprenant une vis creuse (02) ayant un filet extérieur (21) et une ouverture centrale (22) s'étendant de façon coaxiale à l'axe longitudinal (20) de la vis creuse (02), un boulon fileté (03) fixé sur la lampe de véhicule automobile et ayant une première partie filetée (31) s'étendant à travers ladite ouverture centrale (22), ainsi qu'une pièce de serrage (04) en forme de douille disposée dans ladite ouverture centrale (22) sur la première partie filetée (31), de façon coaxiale entre ladite vis creuse (02) et ledit boulon fileté (03), dans laquelle :
- ladite vis creuse (02) présente une collerette (23) qui est disposée d'un côté du filet extérieur (21), fait saillie radialement de la vis creuse (02) et qui, en état monté du dispositif (01), montre en direction de la lampe de véhicule automobile,
- ladite pièce de serrage (04) est disposée, dans l'ouverture centrale (22), à rotation autour de l'axe longitudinal (20) de la vis creuse (02),
- ladite pièce de serrage (02) est disposée à engagement positif dans la direction axiale parallèle à l'axe longitudinal (20) de la vis creuse (02),
- ladite pièce de serrage (04) présente une ouverture axiale (41) traversante qui s'étend coaxialement à l'axe longitudinal (20) de la vis creuse (02) et dont le diamètre intérieur est inférieur au diamètre extérieur de la première partie filetée (31) du boulon fileté (03), et
- ladite pièce de serrage (04) comprend un embout (42) qui présente une conformation apte à être mise en prise avec un outil afin de tourner la pièce de serrage (04) par rapport à la vis creuse (02),
**caractérisée par le fait que**:
- au moins une rainure de butée (24) est disposée dans ladite collerette (23) de la vis creuse (02),
- au moins une butée (05) qui correspond avec ladite au moins une rainure de butée (24) de la collerette (23) de la vis creuse (02) et qui, en état monté du dispositif (01), s'engage dans ladite au moins une rainure de butée (24) pour un appui de couple, est disposée,
- la collerette (23) comprend, sur sa face montrant dans la direction opposée au filet extérieur (21), un cylindre creux (25) qui s'étend coaxialement à l'axe longitudinal (20) et dans la surface latérale (26) duquel s'étend ladite au moins une rainure de butée (24) parallèlement à l'axe longitudinal (20) de la vis creuse (02), et
- le front (29) de la surface latérale (26) du cylindre creux (25), lequel montre dans la direction opposée à la collerette (23) présente, lors de la rotation de la vis creuse (02) autour de son axe longitudinal (20), un pas d'une rainure de butée (24) à l'autre (24) de sorte que, parmi deux bords (27, 28) de la surface latérale (26) qui limitent une rainure de butée (24), le bord (27) qui est situé devant dans la direction de vissage de la vis creuse (02) sur le boulon fileté (03) présente une distance plus faible de la collerette (23), vue axialement suivant l'axe longitudinal (20) de la vis creuse (02), que le bord (28) qui est situé derrière dans la direction de vissage de la vis creuse (02) sur le boulon fileté (03).

2. Lampe de véhicule automobile selon la revendication 1, dans laquelle le boulon fileté (03) est réalisé comme une vis à double filetage qui présente, en plus de la première partie filetée (31), une deuxième partie filetée (32) prévue pour être vissée dans un évidement (06) sur la lampe de véhicule automobile, qui est prévu à cette fin.

3. Lampe de véhicule automobile selon la revendication 1 ou 2, dans laquelle ladite pièce de serrage (04) présente, sur une paroi (43) délimitant son ouverture axiale (41), un filet intérieur (44) correspondant avec la première partie filetée (31) du boulon fileté (03).

4. Lampe de véhicule automobile selon la revendication 1, 2 ou 3, dans laquelle ladite pièce de serrage (04) est réalisée, par rapport à l'ouverture centrale (22), en tant qu'ajustage dans la direction radiale qui donne un couple requis pour la rotation de la pièce de serrage (04) par rapport à la vis creuse (04) autour de son axe longitudinal (20).

5. Lampe de véhicule automobile selon l'une quelconque des revendications précédentes, dans laquelle, pour la disposition à engagement positif dans la direction axiale parallèle à l'axe longitudinal (20) de la vis creuse (02), la pièce de serrage (04) comprend une bride (45) à une extrémité montrant vers ledit embout (42), laquelle présente un diamètre qui est plus grand que l'ouverture centrale (22) de la vis creuse (02) et qui est inférieur au diamètre du filet extérieur (21) de la vis creuse (02).

6. Lampe de véhicule automobile selon l'une quelconque des revendications précédentes, dans laquelle, pour la disposition à engagement positif dans la direction axiale parallèle à l'axe longitudinal (20) de la vis creuse (02), la pièce de serrage (04) présente des moyens d'arrêt (46) à une extrémité montrant dans la direction opposée à l'embout (42), qui, lorsque la pièce de serrage (04) est disposée dans la vis creuse (02), s'engagent radialement derrière la vis creuse (02) depuis l'ouverture centrale (22) et qui présentent une dimension dans la direction radiale qui est plus grande que l'ouverture centrale (22) de la vis creuse (02).

7. Lampe de véhicule automobile selon la revendication 6, dans laquelle lesdits moyens d'arrêt (46) comprennent au moins un nez d'arrêt (47) qui est réalisé de façon élastique radialement vers l'intérieur en direction de l'ouverture axiale (41).

8. Lampe de véhicule automobile selon l'une quelconque des revendications précédentes, dans laquelle ladite pièce de serrage (04) est réalisée dans une matière plastique ou dans un mélange de matières plastiques.

9. Lampe de véhicule automobile selon l'une quelconque des revendications précédentes, dans laquelle ladite au moins une rainure de butée (24) est réalisée comme une fente qui est délimitée de part et d'autre, dans la direction circonférentielle de la surface latérale (26), par des bords (27, 28) et qui présente des bords (27, 28) s'étendant parallèlement et/ou obliquement par rapport à l'axe longitudinal (20) de la vis creuse (02).

10. Lampe de véhicule automobile selon l'une quelconque des revendications précédentes, dans laquelle la butée (05) est réalisée comme une nervure.

11. Lampe de véhicule automobile selon l'une quelconque des revendications précédentes, dans laquelle la lampe de véhicule automobile est réalisée comme feu arrière.

12. Procédé pour agencer et régler un dispositif (01) de fixation au moins partielle d'une lampe de véhicule automobile dans une ouverture de montage d'une carrosserie d'un véhicule automobile, sur une lampe de véhicule automobile selon l'une quelconque des revendications 1 à 11, dans lequel:
- d'abord, le boulon fileté (03) est fixé sur la lampe de véhicule automobile,
- ensuite, la vis creuse (02), avec la pièce de serrage (04) disposée dans l'ouverture centrale (22) de celle-ci, est vissée, la collerette (23) la première, sur la première partie filetée (31) du boulon fileté (03) jusqu'à ce que la butée (05) fixée sur la lampe de véhicule automobile s'engage dans une rainure de butée (24) sur la collerette (23),
- puis, on réalise un réglage de la position du filet extérieur (21) et de la collerette (23) délimitant celui-ci, dans la direction axiale par rapport à l'axe longitudinal (20) de la vis creuse (02), le long du boulon fileté (03); la position du filet extérieur (21) et de la collerette (23) délimitant celui-ci, dans la direction axiale par rapport à l'axe longitudinal (20) de la vis creuse (02), le long du boulon fileté (03), étant réglée en tournant la pièce de serrage (04) par rapport à la première partie filetée (31) du boulon fileté (03).
